Europäisches Patentamt

European Patent Office

Office européen des brevets

(19)

(11) Veröffentlichungsnummer: **0 512 158 A1**

(12) **EUROPÄISCHE PATENTANMELDUNG**

(21) Anmeldenummer: **91119890.1**

(22) Anmeldetag: **21.11.91**

(51) Int. Cl.5: **B23Q 1/12**, B23Q 11/02, B08B 5/04, A47L 9/22

(30) Priorität: **26.11.90 DE 4037522**

(43) Veröffentlichungstag der Anmeldung:
**11.11.92 Patentblatt 92/46**

(84) Benannte Vertragsstaaten:
**AT BE CH DE DK ES FR GB GR IT LI LU NL SE**

(71) Anmelder: **Fietz, Manfred**
**Müllersbaum 40**
**W-5093 Burscheid(DE)**

(72) Erfinder: **Fietz, Manfred**
**Müllersbaum 40**
**W-5093 Burscheid(DE)**

(54) **Programmgesteuerte Anbaueinrichtung zum Absaugen zerspanter Materialien, Dämpfe, Nebel, Gase.**

(57) Progammgesteuerte Anbaueinrichtung zum Absaugen zerspannter Materialien, Dämpfe, Nebel und Gase dadurch gekennzeichnet, daß an mindestens zwei, mit einem sperrbaren Kreuzgelenk (7) gekoppelten Schwenkarmen (6), einerseits ein pneumatischer Arbeitszylinder (1) mit durchgehendem Kolben-Saugrohr (2) durch ein ebenfalls sperrbaren Kreuzgelenk (8) und andererseits durch ein weiteres, sperrbaren Kreuzgelenk ein Anbaustück (10) zur Befestigung an einer Werkzeugmaschine verbunden sind.

FIG.3

EP 0 512 158 A1

Die Erfindung betrifft eine im Erfindungstitel bezeichnete Absaugeinrichtung.

Zweck der Erfindung ist die Absaugung zerspanter Materialien, Dämpfe, Nebel, und Gasen aus unmittelbarer Nähe ihrer Entstehung bei sich verändernden Entstehungspositionen durch Werkzeug-und Werkstückwechsel an programmierten Bearbeitungsmaschinen und Angriffspunkten robotergesteuerter Werkzeuge, beispielsweise Schweißelektroden und Schweißzangen an Montagetischen und Fertigungsstraßen von denen, durch physikalische und chemische Reaktionen erzeugten Dämpfe, Nebel und Gase programmgesteuert abzusaugen sind

Der Stand der Technik absaugender und abfördernder Einrichtungen, gemäß der bekannten Patentliteratur, lässt eine erhebliche Anzahl umweltrelevanter Einsätze ansaugender und abfördender Einrichtungen unberücksichtigt, insbesondere bei programmierten Bearbeitungsmaschinen wie Drehautomaten und sonstiger Werkzeugmaschinen, deren vielfacher Wechsel der Bearbeitungswerkzeuge mit der Zu- und Abführung des Werkstückes eine Absaugung des zerspanten Materials, aus unmittelbarer Nähe des Anfalles, mit den bisher bekannten Einrichtungen und Maßnahmen nicht, oder nur unzureichend zulässt. Das ist auch die Lehre aus den Veröffentlichungen, beispielsweise gemäß den Patentschriften DP 33 33 267 und DP 22 5o 847. Abgesehen davon, daß diese Patentschriften, einschließlich der US 4 822 219 und andere, jeweils eine, ausschließlich auf eine bestimmte Maschine zugeordnete Absaugeinrichtung beschreiben, ist daraus auch keine Lehre zum Bau einer universal einsetzbaren Absaugeinrichtung zu entnehmen, die an der Mehrzahl programmgesteuerter Werkzeugmaschinen und Montagebänder verwendbar wäre. Bei Maschinen zur Metallverarbeitung bezw. Metallbearbeiteung ist die Frage der Absaugung, insbesonders grobe Zerspanungsmaterials mit dem Abluß von Kühlmittel gelöst. Bei der Zerspanung nicht metallischer Materialien, die trocken zu bearbeiten sind, ist die Absaugung der Zerspanungsprodukte, einschließlich feinster Staubteilchen nur mit dem unmittelbaren Ansatz eines Saugmundes am Ort des Anfalles möglich. Das trifft auch auf Werkstükke aus Graphit und graphithaltigem Eisenguß zu.

Der Erfindung lag die Aufgabe zu Grunde die, für bestimmte, auf programmgesteuerten Maschinen zu zerspanende und zu bearbeitende Materialien, nicht ausreichende Efficienz der maschineneigenen Absaug-und Abförderungseinrichtung durch eine größen- und leistungstypisierten Anbaueinrichtung zu ersetzen ohne daß deren Funktion den programmierten Werkstück- und Werkzeugwechsel behindert oder, daß Beengungen im Bearbeitungsbereich zu berücksichtigen wären.

Die Lösung der der Erfindung zu Grunde liegende Aufgabe bestand in der erfindungsgemäßen Maßnahme, eine Saugrohrleimit einer damit verbundenen Saugdüse, bei jedem programmierten Werkzeug- und Werkstückwechsel, aus der unmittelbaren Nähe des, am Werkstück wirksamen Werkzeuges so weit zu entfernen, daß eine Behinderung des Bearbeitungsprogrammes nicht eintreten kann. Erfindungsgemäß wird die im Takt des Werkzeug- und Werkstückwechsel abfolgende An- und Ablegung der Saugdüse bezw. des Saugrohres auf pneumatischem Wege in der Weise besorgt, daß das Saugrohr als hohle, durchgehende Kolbenstange eines pneumatischen Arbeitszylinders oder als Hohlachse eines elektrischen Linearmotores ausgebildet ist. Zur weiteren Ausgestaltung der Erfindung gehört ein Gelenkgestänge welches an am Maschinenkörper befestigt ist und die erfindungsgewollte Plazierung, des am Ausgangsende des Gestänges befestigten Saugrohr- Bewegungselementes (Pneumatischer Arbeitszylinder bezw. Linearmotor) ermöglicht. Es gehört zur weiteren Ausgestaltung der Erfindung, fremdkraftbetriebene, steuerbare Bewegungselemente, beispielsweise kleine pneumatische Arbeitszylinder in das Gelenkgstänge zu integrieren, womit die Saugdüse, in einem Bearbeitungszyklus, an verschiedenen Bearbeitungsstellen des Werkstücks positioniert, d. h. zu- und abgeführt werden kann.

Auf den Zeichnungsblättern ist ein Ausführungsbeispiel der erfindungsgemäßen Anbaueinrichtung zum Absaugen zerspanender Materialien,, Dämpfe, Nebel und Gasen mit 5 Figuren dargestellt; Es bedeuten:

Fig. 1    Seitenansicht eines Ausführungsbeispiels der erfindungsgemäßen Anbaueinrichtung mit, in Saugstellung ausgefahrenen Kolben-Saugrohr.

Fi2. 2    Seitenansicht der erfindungsgemäßen Anbaueinrichtung gemäß Fi. 1 mit zurück gefahrenen Kolben-Saugrohr.

Fig. 3    Seitenansicht der erfindungsgemäßen Anbaueinrichtung gemäß Fig. 1 mit geändert positionierten pneumatischen Arbeitszylinder.

Fig. 4    Seitenansicht der erfindungsgemäßen Anbaueinrichtung gemäß Fig. 1 mit rechtwinkelig abgeschwenktem Haltegestänge.

Fig. 5    Ansicht eines Ausführungsbeispiels der erfindungsgemäßen Anbaueinrichtung gemäß Fi. 1 , angebaut, beispielsweise am Revolver-Werkzeuhalter einer Schrägbett-Drehmaschine.

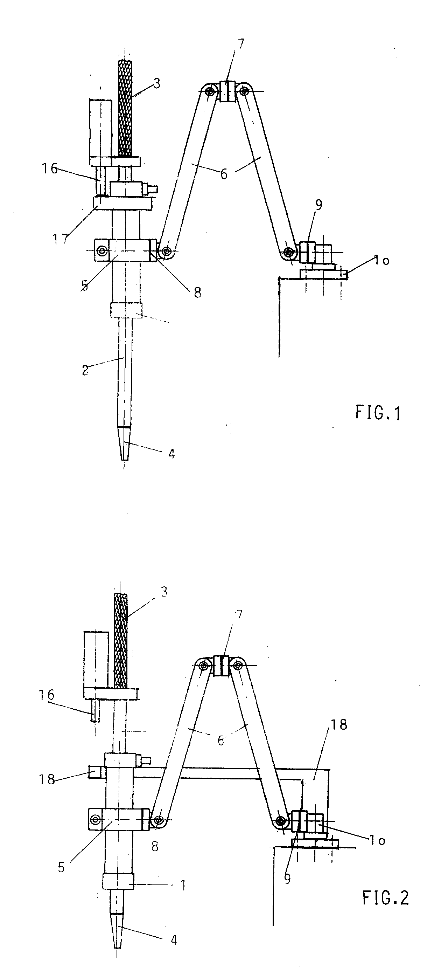

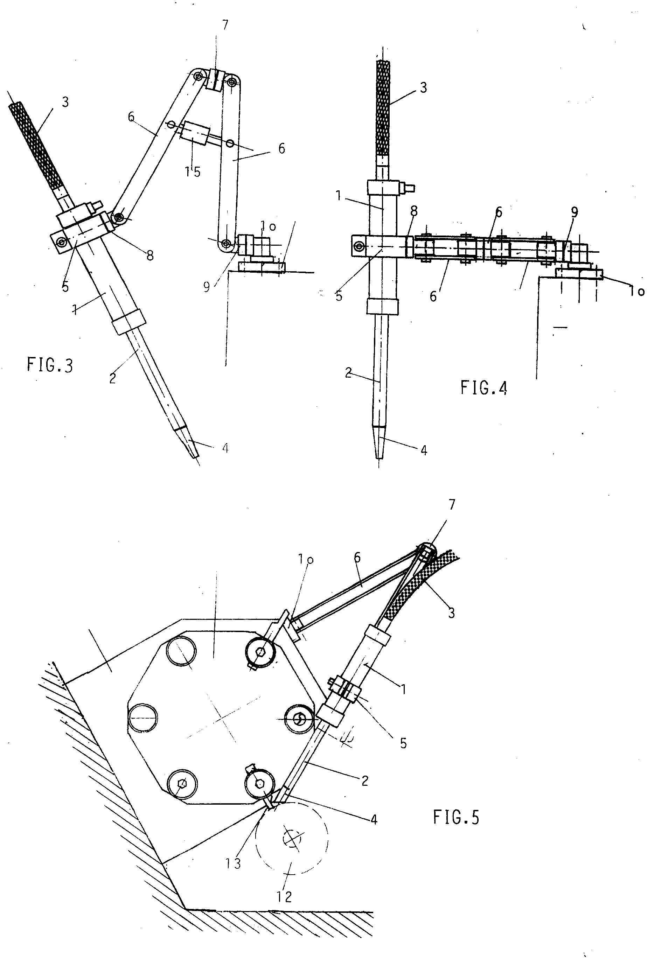

Der pneumatische Arbeitszylinder (1) bewegt im vorgegebenen Takt das Kolben-Saugrohr (2) mit der daran befestigten, austauschbaren Saugdüse (4) und der Saugleitung (3) aus der Stellung gemäß Fig. 1 in die Stellung gemäß Fig. 2. Damit ist die Saugdüse (4) vom Werkstück (12) abgehoben, wonach der unbehinderte Wechsel des Werkstückes, bezw. des Werkzeuges (13) möglich ist. Dieser Vorgang wird an einem Beispiel gemäß Fig. 5 erläutert. Der Revolver-Werkzeughalter (11) der skizzenhaft angedeuteten Schrägbett-Drehmaschine (14), käme bei einem Werkzeugwechsel zur Kollision mit dem Kolben-Saugrohr wenn dasselbe in unmittelbarer Nähe des zu wechselnden Bearbeitungswerkeuges (13) verbleiben würde. Das wegfahrende Kolben-Saugrohr, verhindert die Kollision. Obgleich der pneumatische Arbeitszylinder (1) das Hauptteil der erfindungsgemäßen Anbaueinrichtung darstellt kann der Anbau, beispielsweise an eine Werkzeugmaschine nur mit einem Gestänge erfolgen mit dem der pneumatische Arbeitszylinder in jede gewünschte Position zu bringen ist. Das erfindungsgemäße bezw. ein Ausführungsbeispiel eines erfindungsgemäßen Gestänges besteht aus den Schwenkarmen (6) die mit einem Mittelgelenk (7) zueinander schwenkbar und verdrehbar verbunden sind. Hierbei ist der eine Schwenkarm mit dem Anbaustück (1o) ebenfalls schwenk-und verdrehbar verbunden, was auch auf den anderen Schwenkarm zutrifft, der mit der Ringklammer (5) verbunden ist in die der pneumatische Arbeitszylinder eingeklammert ist. Die gegeneinander verdrehbare und zueinander schwenkbare Schwenkarme mit den drehbaren Endstücken gestatten, in einem ausreichend großem Raum, die Positionierung der Saugdüse an jedem gewünschten Platz, wie beispielsweise Fig. 5 erkennen lässt. Die Fig. 1 bis 4 zeigen zeigen aus zeichnerischen Darstellungsgründen die variable Positionierbarkeit der Saugdüse nur in einen Ebene indessen alle relevante Ebenen in Betracht kommen. Es versteht sich, daß die Gelenke (7), (8), und (9) nach der Positionierung der Saugdüse zu sperren sein müssen, so daß die ganze Anbaueinrichtung bis auf das Kolben-Saugrohr eine starre Verbindung zwischen dem Maschinenkörper, an dem das Anbaustück (1o) befestigt ist, und dem pneumatischen Arbeitszylinder herstellt.

Um die Saugdüse nicht nur in einer Richtung vom Werkstück abheben zu können, wird noch erfindungsgemäß vorgeschlagen, beispielsweise zwischen die Schwenkarme ein Bewegungselement einzubauen, beispielsweise ein pneumatischer Arbeitszylinder, der programmgesteuert den Winkel zwischen den Schwenkarmen verändert, d.h. im Zyklus des vorgegebenen Arbeitsablaufes. Ein solches pneumatisches Bewegungsele ment (15) ist in die Fig. 2 eingezeichnet. Dieses Bewegungs - element kann erfindungsgemäß auch zwischen einem Schwenkarm und dem Anbaustück (1o) angeordnet sein und erfindungsgemäß ist vorgesehen, daß die Teile der erfindungsgemäßen Anbaueinrichtung, zur variablen Anbringung zusätzlicher Bewegungselemente,, entsprechende Ausbildungen besitzen.

Soweit die Nachführung der Saugdüse (4) an das Bearbeitungswerkzeug (13) nicht schon durch die Befestigung der Anbaueinrichtung an den Werkzeughalter (11) gewährleistet, oder unzureichend gewährleistet ist wird erfindungsgemäß vorgeschlagen, eine zusätzliche Nachführungsmöglichkeit durch die Anschläge (16), (17) oder (18) zu schaffen, wobei der eine Anschlag (16) mit im Bearbeitungsprogramm aufgenommen ist und der Nachführungsnotwendigkeit entsprechend verändert wird.

**Bezugszeichen**

| 1 | Pneumatischer Arbeitszylinder mit zweiseitig austretendem Kolben Saugrohr |
|---|---|
| 2 | Kolben - Saugrohr |
| 3 | Saugleitung |
| 4 | Auswechselbare Saugdüse |
| 5 | Ringklammer |
| 6 | Schwenkarm |
| 7 | Mittelgelenk |
| 8 | Ringklammergelenk |
| 9 | Anbaugelenk |
| 1o | Anbaustück |
| 11 | Revolver-Werkzeughalter |
| 12 | Werkstück |
| 13 | Werkzeug |
| 14 | Schrägbett |
| 15 | Pneumatisches Bewegungselement |
| 16 | Veränderlicher Anschlag |
| 17 | Innerer Anschlag |
| 18 | Außenanschlag |

**Patentansprüche**

1. Programmgesteuerte Anbaueinrichtung zum Absaugen zerspanter Materialien, Dämpfe, Nebel und Gasen dadurch gekennzeichnet, daß an mindestens zwei, mit einem sperrbaren Kreuzgelenk (7) gekoppelten Schwenkarmen (6) einerseits ein pneumatischer Arbeitszylinder (1) mit durchgehendem Kolben-Saugrohr (2) durch ein ebenfalls sperrbaren Kreuzgelenk (8) und andererseits durch ein weiteres, sperrbaren Kreuzgelenk mit einem Anbaustück (1o) verbunden ist.

2. Programmgesteuerte Anbaueinrichtung zum Absaugen zerspanter Materialien, Dämpfe, Nebel und Gasen gemäß Anspruch 1 dadurch gekennzeichnet , daß die Bewegungsstrecke des oszillierenden Kolben-Saugrohres (1o) durch daran angeordnete Anschläge (16) und (17), innerhalb der Anbaueinrichtung oder durch Anschläge (18) außerhalb der Anbaueinrichtung zu begrenzen ist.

3. Programmgesteuerte Anbaueinrichtung zum Absaugen zerspanter Materialien, Dämpfe, Nebel und Gasen gemäß Anspruch 1 dadurch gekennzeichnet daß, die Begrenzungsanschläge (17) und (18) und andere Begrenzungsanschläge programmiert, mit nicht manuellen Mitteln zu verändern sind.

4. Programmgesteuerte Anbaueinrichtung zum Absaugen zerspanter Materialien, Dämpfe, Nebel und Gasen gemäß Anspruch 1 dadurch gekennzeichnet, daß mit einem zusätzlichen Bewegungselement (15), innerhalb oder teils außerhalb der Anbaueinrichtung eingreifend, die Bewegungsrichtung des Kolben-Saugrohres zu ändern ist.

FIG.1

FIG.2

FIG.3

FIG.4

FIG.5

Europäisches Patentamt

Patentamt

## EUROPÄISCHER RECHERCHENBERICHT

Nummer der Anmeldung

| | EINSCHLÄGIGE DOKUMENTE | | EP 91119890.1 |
|---|---|---|---|

| Kategorie | Kennzeichnung des Dokuments mit Angabe, soweit erforderlich. der maßgeblichen Teile | Betrifft Anspruch | KLASSIFIKATION DER ANMELDUNG (Int Cl⁵) |
|---|---|---|---|
| A | US - A - 4 607 413 (SCHMIDT)     * Fig. 4; abstract * -- | 1-4 | B 23 Q 1/12 B 23 Q 11/02 B 08 B 5/04 A 47 L 9/22 |
| A | SOVIET INVENTIONS ILLUSTRATED, P,Q section, week 9027, August 15, 1990 DERWENT PUBLICATIONS LTD., London, P 66     * SU-1511 060 (MACH TOOL) * -- | 1-4 | |
| A | SOVIET INVENTIONS ILLUSTRATED, P,Q section, week 8851, February 8, 1989 DERWENT PUBLICATIONS LTD., London, P 56     * SU-1404 267 (KIEV POLY) * ---- | 1-4 | |

| | | | RECHERCHIERTE SACHGEBIETE (Int. Cl⁵) |
|---|---|---|---|
| | | | A 47 L 5/00 A 47 L 9/00 B 08 B 5/00 B 23 Q 1/00 B 23 Q 11/00 |

Der vorliegende Recherchenbericht wurde für alle Patentansprüche erstellt.

| Recherchenort | Abschlußdatum der Recherche | Prüfer |
|---|---|---|
| WIEN | 22-06-1992 | BLASL |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82